# EUROPEAN PATENT SPECIFICATION

(11) **EP 2 860 328 B1**
(45) Date of publication and mention of the grant of the patent: **22.11.2017**
(21) Application number: 13382405.2
(22) Date of filing: 14.10.2013
(51) Int. Cl.: E04H 4/12, F04D 15/00

(54) **CONTROL AND OPERATING METHOD AND SYSTEM FOR A SWIMMING POOL FILTRATION INSTALLATION**
STEUERUNGS- UND BETRIEBSVERFAHREN UND SYSTEM FÜR EINE SCHWIMMBAD FILTRIERANLAGE
SYSTEME ET PROCEDE DE FONCTIONNEMENT ET DE COMMANDE POUR UNE INSTALLATION DE FILTRATION DE PISCINE

(43) Date of publication of application: 15.04.2015
(73) Proprietor: Gidelmar, S.A., Montevideo (UY)
(72) Inventor: Bica Caffera, Gabriel Alejandro, Montevideo (UY)
(74) Representative: Temiño Ceniceros, Ignacio

(56) References cited:
- EP-A1- 2 412 981
- EP-A2- 0 992 685
- WO-A1-2011/026184
- US-A- 5 730 861
- US-A1- 2007 154 320

## Description

### Technical Field of the Invention

The present invention relates to a control and operating method and system for a filtration installation. The system comprises a hydraulic pump for propelling a water flow, a control device for controlling the speed of said pump and a multiport valve provided with rotational control means for operating the stem of the valve according to which the valve is able to adopt at least two operating positions.

The invention also relates to an easy-to-assemble assembly for water filtration that can be adapted to any filtration installation comprising a multiport valve provided with rotational control means for operating the stem of the valve.

### Background of the Invention

In swimming pool filtration installations the user is known to manually select through a multiport valve the operation that must be performed at all times, such as operations for filtration, washing the filter, rinsing the filter, draining the swimming pool, circulating water without filtering and valve closure, for example. The user or operator of the swimming pool filtration installation must choose which operation have to be performed according to the swimming pool water conditions, and to that end the user/operator must rotate a selector lever of the valve to a predetermined position, said lever constituting rotational control means that move the stem of the valve to regulate water distribution by opening and closing a plurality of inlets and outlets of the valve according to the chosen operation.

Nevertheless, in addition to selecting the operation to be performed by means of rotating the lever of the valve, the user must also take care of adjusting the speed of the hydraulic pump of the filtration installation to a specific value according to the operation to be performed. For example, to wash or rinse the filter, the rotational speed of the pump must be greater than the speed required for the filtering operation, and when the valve closure operation is required, the pump must be stopped. To change the rotational speed of the pumps, said pumps are commonly equipped with a control device for controlling its speed, through which the user selects from among pre-established values the speed at which the pump must rotate for the filtering operation selected in the valve.

This way of acting generates not only trouble for the user resulting from having to manually select both the position of the stem of the valve and the rotational speed of the pump, but also in many cases considerable time elapses between one selection and the next, i.e., when the user selects a position of the valve according to the filtering operation to be performed, the pump can be working for a considerable time at an inappropriate speed for the chosen operation and cause water hammers and other problems, in addition to the subsequent energy output if the pump is rotating at a speed greater than the speed that the filtering operation would require. Another problem is that the user can make a mistake and select an inappropriate rotational speed of the pump for the position in which the valve is located, with the subsequent failures this may entail. Inappropriately manipulating the valve can also generate useless energy outputs and system equipment operating problems.

In this point, the document WO2011/026184 discloses an assembly for water filtration in swimming pool installations, comprising a multiport valve provided with rotational control means for operating the stem of the valve for maneuverability of the valve in adopting at least two operating solutions, and the assembly further comprising a hydraulic pump for propelling a water flow; and also the document EP0992685 discloses a system with detections means and a different wireless emitter and receiver. However, none of the cited prior art documents describes an assembly as defined in the present patent application.

It would therefore be desirable to provide a control and operating system for a swimming pool filtration installation that facilitated the task of the system user, that allowed efficient installation operation assuring correspondence between the operating filtering position for filtering to be performed and the rotational speed of the pump at all times.

### Disclosure of the Invention

According to appended claim 1, a first aspect of the invention, an assembly for water filtration in swimming pool installations, comprising a multiport valve provided with rotational control means for operating the stem of the valve for maneuverability of the valve in adopting at least two operating positions and further comprising a hydraulic pump for propelling a water flow, is disclosed.

Essentially, the assembly for water filtration in swimming pool installations is characterized in that it comprises:
- detection means able to detect at least the angular position of the stem of the multiport valve with respect to a reference plane, preferably a horizontal plane, and a wireless emitter for emitting the angular position or information relating to the angular position detected by the detection means, the detection means and the emitter being assembled on one and the same support provided with detachable fixing means for coupling to the outside of the rotational control means of the multiport valve; and
- a wireless receiver for receiving the angular position or the information emitted by the emitter, capable of generating a command to operate the pump in a specific operating cycle and/or at a specific rotational speed of the pump.

According to another feature of the assembly object of the invention, the detection means comprises a magnetometer and/or an accelerometer, and interpretation means providing the instantaneous angular position or information depending on the instantaneous angular position of the stem of the valve to the emitter.

According to another feature of the assembly object of the invention, the hydraulic pump comprises a control device for controlling its speed in which the receiver is arranged. According to another feature of the invention, the detection means comprises a magnetometer and/or an accelerometer, and interpretation means providing the instantaneous angular position or information depending on the instantaneous angular position of the stem of the valve to the emitter.

According to another feature of the invention, the control means of the multiport valve is configured for internally housing the detection means for detecting the angular position of the stem of the multiport valve and the emitter for emitting the angular position or information relating to the angular position.

According to another feature of the invention, the multiport valve is a six-way valve with six corresponding operating positions.

According to another feature of the invention, the control device for controlling the speed of the pump comprises a memory unit storing predetermined relationships between the angular position of the multiport valve and the operating cycles and/or the rotational speed of the pump.

According to another feature of the invention, the hydraulic pump is a centrifugal pump, in which its operating cycles are determined by the rotational speed of frequency thereof. According to appended claim 8, a second aspect of the invention, a control and operating system for a swimming pool filtration installation, comprising an assembly for water filtration according to any of claims 1 to 7 is disclosed. According to appended claim 9, a third aspect of the invention, a control and operating method for a swimming pool filtration installation in a system according to claim 8 is disclosed. The method comprises the following steps:
a) determining the angular position of the stem of the valve with respect to a reference plane, preferably a horizontal plane;
b) automatically sending said angular position or information relating to same to a control device for controlling the speed of the pump;
c) receiving said angular position or information relating to the position, and determining from same an operating cycle and/or rotational speed; and
d) operating the pump in the operating cycle and/or at the rotational speed previously determined.

According to another feature of the method object of the invention, before step a) for determining the angular position, an initialization operation is performed in which corresponding working operating positions and/or corresponding rotational speeds are assigned to predetermined angular positions of the stem of the valve.

According to another feature of the method object of the invention, when an angular position or information relating to the angular position that does not coincide with any of the predetermined angular positions of the stem of the valve is received in step c), a shut-down operating cycle of the pump and/or a nil rotational speed is determined, and pump shut-down is actuated in step d).

According to another feature of the method object of the invention, the position of the stem of the valve is determined in step a) from a magnetometer and/or an accelerometer.

According to another feature of the method object of the invention, sending and receiving the angular position or information relating to same in steps b) and c) is performed wirelessly.

### Brief Description of the Drawings

Two preferred embodiments of the control and operating system of the invention are shown by way of non-limiting examples in the attached drawings. In said drawings:
Fig. 1 is a perspective view of the control and operating system object of the invention;
Fig. 2 is a perspective view of the hydraulic pump and the control device for controlling the speed of the pump which are part of the system of Fig. 1;
Fig. 3 is a perspective view of the multiport valve of the system of Fig. 1;
Fig. 4 is a view of the valve of Fig. 3 in which the detection means and the emitter housed in the rotational control means of the valve are shown;
Fig. 5 is a view of a multiport valve according to a preferred embodiment of the control and operating system of the invention;
Fig. 6 is a perspective view of a device formed by the detection means and of the emitter shown in the valve of Fig. 5; and
Fig. 7 is an exploded view of the device shown in Fig. 6.

### Detailed Description of the Drawings

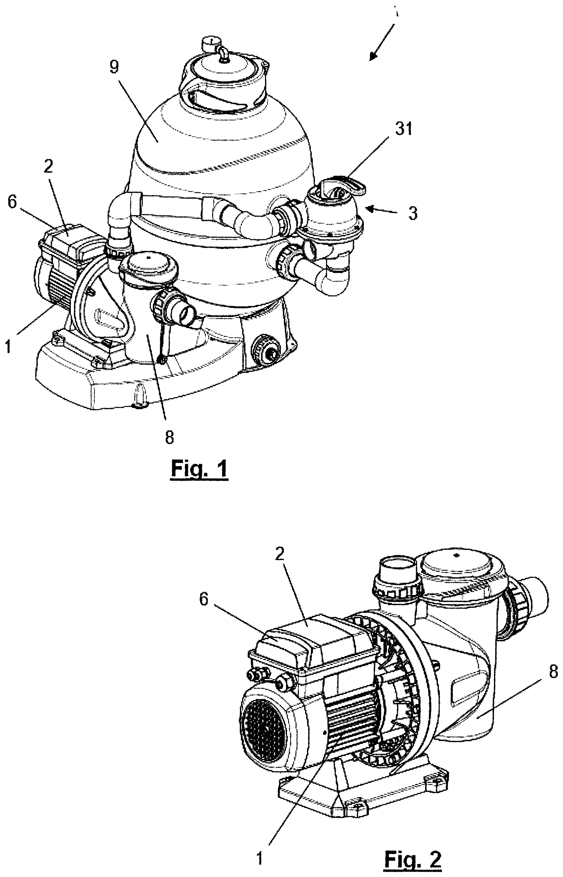

Fig. 1 shows a control and operating system 10 for a swimming pool filtration installation, in which there can be distinguished, among others, a hydraulic pump 1 for propelling a water flow, a control device 2 for controlling the speed of said pump 1, also commonly referred to as variable frequency drive, a pre-filter 8, a reservoir or tank 9, and a multiport valve 3 provided with rotational control means 31 configured as a rotational selector lever to move the stem of the valve 3 so that it adopts a specific operating position. For example, the specific operating positions for the valve 3 depicted in the drawings, which is a six-way valve 3, are: operating position for filtration, for washing the filter, for rinsing the filter, for draining the swimming pool, for circulation without filtration and for valve closure.

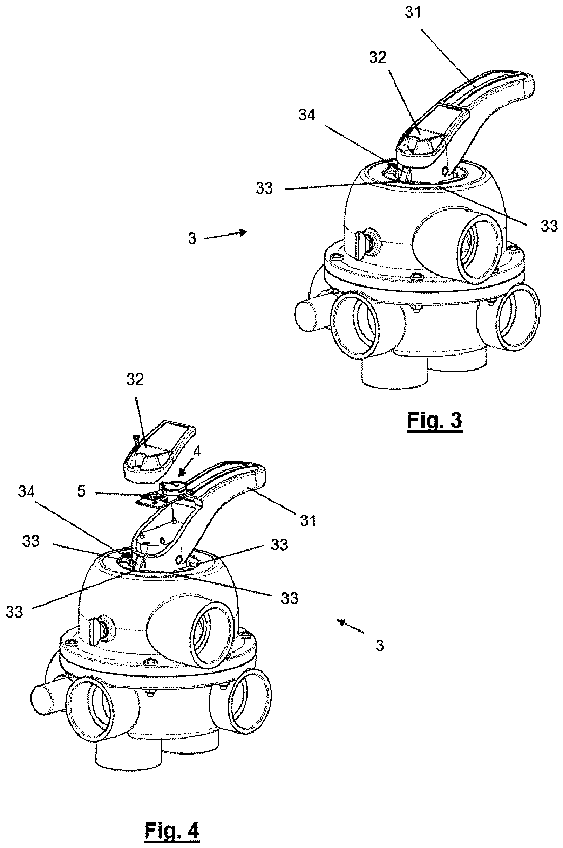

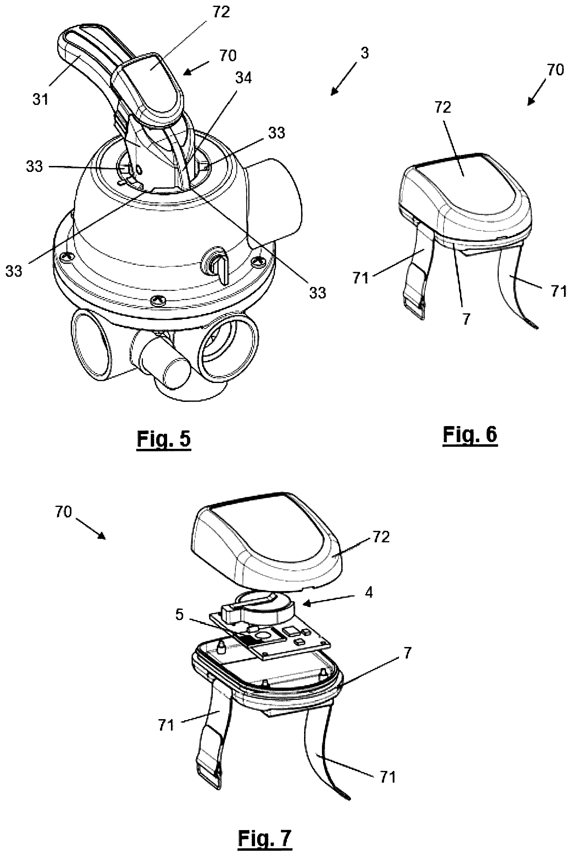

Furthermore, the control system 10 comprises detection means 4, seen in Figs. 4 and 7, arranged in the multiport valve 3 that detect at least the angular position of the stem of the valve 3 with respect to a reference plane, preferably a horizontal plane; an emitter 5 for emitting the angular position or information relating to said angular position; and a receiver 6 for receiving the information emitted by the emitter 5, capable of generating a command on the control device 2 for controlling the speed of the pump 1 to operate the pump 1 in a specific operating cycle and/or at a specific rotational speed. Both the emitter 5 and the receiver 6 are wireless devices, the emitter 5 being arranged in the vicinity of the rotational selector lever of the valve 3, and the receiver 6 being arranged in the control device 2 for controlling the speed of the pump.

Thus, for example, if the detection means 4 detects that the angular position of the stem of the valve 3 is in a filtration position, the emitter 5 will send said angular position or information about same to the receiver 6 and the latter will order the control device 2 to operate the pump 1 at the speed suitable for the filtration operating cycle, in this case equal to 1120 rpm or 20 Hz. If after a time the user of the swimming pool filtration installation wants to wash the filter, he/she will rotate the rotational control means 31 in the form of a lever of the valve 3 ninety degrees. The detection means 4 will detect that the angular position of the stem of the valve 3 is in the position for washing the filter, the emitter 5 will transmit said position or information to the receiver 6 which will in turn generate the command so that the control device 2 operate the pump 1 at the speed suitable for the washing operating cycle of the filter, in this case equal to 2800 rpm or 20 Hz. Work cycles of the pump 1 can thus be automated, achieving maximum operating efficiency and simplicity because the pump 1 starts operating in the required work cycle according to the needs of the installation generated from the selection of the user through the rotation of the selector lever of the valve 3. It should be mentioned that for setting up the system 10, it may be necessary to perform an initialization or calibration operation on the valve 3 in which an angular position of the valve 3 is assigned to a working operating position and the relationships between the remaining predetermined angular positions and the remaining working operating positions can be established from there.

As regards the hydraulic pump 1 and the control device 2 for controlling its speed, they can be coupled to one another forming a compact pumping unit together with a high capacity pre-filter 8 and suction and discharge fittings to be connected to the pipes of the filtration systems, the pumping unit being provided with a common support base, as shown in Fig. 2. In the unit depicted in Figs. 1 and 2, the pump 1 is a single-stage suction centrifugal pump designed for recirculating water in domestic or community swimming pool systems. As mentioned above, the receiver 6 is arranged in the control device 2. It should be mentioned that the control device 2 comprises a memory unit storing predetermined relationships between the angular position of the valve 3, that of its stem, and the operating cycles and/or the rotational speed of the pump 1, such that each detected predetermined angular position translates into a rotational speed of the pump 1.

The detection means 4 preferably comprises a magnetometer, an accelerometer or both at the same time, although it can be formed by other similar components capable of detecting the angular position of the stem of the valve 3 (including inclination with respect to a horizontal plane). Furthermore, the detection means also comprises interpretation means providing the instantaneous angular position or information depending on the instantaneous angular position of the valve 3 to the emitter 5.

With respect to the multiport valve 3, as previously indicated, it is preferably a six-way valve, capable of adopting a series of operating positions according to the rotation the user applies to the rotational control means 31, because the latter in turn move the stem of the valve 3, adopting a corresponding angular position corresponding to the opening and closing of a plurality of inlets and outlets of the valve 3 for the passage of liquid.

As seen in Figs. 3, 4 and 5, the depicted valve 3 is configured so that the rotational control means 31 can adopt six stable predetermined positions according to the rotation of the stem of the valve 3, corresponding to the six operating positions for filtration, for washing the filter, for rinsing the filter, for draining the swimming pool, for circulation without filtration and for valve closure. These six operating positions differ from one another angularly by 60°, as can be deduced from the radial notches 33 seen in the upper face of the body of the valve 3, said notches being configured for fitting the front projection 34 with which the rotational control means 31 is provided.

Advantageously, the upper face of the body of the valve 3 will have indications that identify the correspondence between each predetermined angular position and each operating position, so that the user can easily know how far to rotate the rotational control means 31 configured as a selector lever if he/she wants the system for the swimming pool filtration installation to carry out a specific operation. For the user to select the required operation, he/she will have to press the selector lever down and rotate it to notch 33 associated with the indication identifying the desired operation, after which he/she may release the selector lever and the projection 34 will remain inserted in the chosen notch 33.

It should be mentioned that the system 10 is designed to detect any manipulation of the valve 3, such that when the detection means 4 detects that the angular position of the stem of the valve 3 does not correspond with any of the six predetermined positions assigned to the previously mentioned operating positions, for example an intermediate position between two of the predetermined positions, the emitter 5 will send said angular position to the receiver 6, and the latter will generate a command on the control device 2 for controlling the speed of the pump so that the pump 1 adopts a shut-down operating cycle, i.e., a command whereby the rotational speed of the pump will become nil. Water hammers and other problems in the installation are thus prevented.

Although both Fig. 3 and Fig. 5 correspond to a valve 3 provided with the detection means 4 and with the emitter 5 for operation thereof as part of the control and operating system 10, the difference is based on the location thereof with respect to the valve 3. Therefore, in the valve of Fig. 3 the rotational control means 31, in the form of a selector lever, is configured for internally housing the detection means 4 for detecting the angular position of the stem of the valve 3 and the emitter 5, as observed in Fig. 4. The control means 31 having inside the front end part (the part closest to the projection 34) a housing with a flat base on which there is placed a circuit board in which circuit board the detection means 4 and the emitter 5 are arranged. The housing is closed at the top by a cover 32, the components located inside the front part of the selector lever of the valve 3 thus being protected.

In turn, in the valve 3 of Fig. 5 it is seen that a device 70 such as the one depicted separately in Figs. 6 and 8 is coupled on the outside of the rotational control means 31. The device 70 comprises a support 7 on which there is arranged the circuit board in which the detection means 4 and the emitter 5 are arranged, and an upper cover 72 that can be coupled to the support 7. Furthermore, the support 7 is provided with detachable fixing means 71, such as securing bands or a belt for example, whereby the device 70 can be easily coupled to the outside of any selector lever of a valve 3.

Any swimming pool filtration installation can thus benefit from the control and operation of a system 10 such as the one described above because it would be enough to simply equip the already existing system with a device 70 such as the one described above and with pumping equipment such as that depicted in Fig. 2, i.e., comprising a hydraulic pump 1 with the ability to change its speed, for example, by means of coupling to a control device 2 for controlling the speed, and a wireless receiver 6 that receives the information emitted by the emitter 5 of the device 70.

In conclusion, the control and operating system 10 described above allows automating the swimming pool filtration system, the detection of the position selected by the user in the valve 3 and the subsequent power consumption savings while filtering the water of the swimming pool, because the pump 1 is operated at all times according to the operation required by the user, working at the corresponding suitable speed, and if the filtering operation to be performed cannot be determined, the pump 1 stops without wasting power, thereby reducing water hammers and other typical problems in swimming pool installations.

## Claims

1. - An assembly for water filtration in swimming pool installations, comprising a multiport valve (3) provided with rotational control means (31) for operating a stem of said valve (3) for maneuverability of the valve in adopting at least two operating positions, a hydraulic pump (1) for propelling a water flow; and the assembly being **characterized in that** it comprises:
detection means (4) able to detect at least the angular position of the stem of the multiport valve (3) with respect to a reference plane, preferably a horizontal plane, and a wireless emitter (5) for emitting the angular position or information relating to the angular position detected by the detection means (4), the detection means and the emitter being assembled on one and the same support (7) provided with detachable fixing means (71) for coupling to the outside of the rotational control means (31) of the multiport valve (3); and
a wireless receiver (6) for receiving the angular position or the information emitted by the emitter (5), capable of generating a command to operate the pump in a specific operating cycle and/or at a specific rotational speed of the pump.

2. - The assembly according to claim 1 wherein the detection means (4) comprises a magnetometer and/or an accelerometer, and interpretation means providing the instantaneous angular position or information depending on the instantaneous angular position of the stem of the valve (3) to the emitter (5).

3. The assembly according to claim 1 or 2, wherein the assembly comprises a control device (2) for controlling the speed of the hydraulic pump (1) in which the receiver (6) is arranged.

4. The assembly according to any one of the preceding claims, wherein the rotational control means (31) of the multiport valve (3) is configured for internally housing the detection means (4) for detecting the angular position of the stem of the multiport valve (3) and the emitter (5) for emitting the angular position or information relating to the angular position.

5. -The assembly according to any one of the preceding claims, wherein the multiport valve (3) is a six-way valve with six corresponding operating positions.

6. - The assembly according to any one of the preceding claims, wherein the control device (2) comprises a memory unit storing predetermined relationships between the angular position of the stem of the multiport valve (3) and the operating cycles and/or the rotational speed of the pump.

7. - The assembly according to any one of the preceding claims, wherein the hydraulic pump (1) is a centrifugal pump in which the operating cycles are determined by the rotational speed or frequency thereof.

8. - A control and operating system (10) for a swimming pool filtration installation, comprising an assembly for water filtration according to any of claims 1 to 7.

9. - A control and operating method for a swimming pool filtration installation in a system (10) according to claim 8, comprising the following steps:
a) determining at least the angular position of the stem of the multiport valve (3) with respect to a reference plane, preferably a horizontal plane;
b) automatically sending said angular position or information relating to same to a control device (2) for controlling the speed of the pump;
c) receiving said position or information and determining from same an operating cycle and/or rotational speed; and
d) operating the pump in the operating cycle and/or at the rotational speed previously determined.

10. - The method according to claim 9, **characterized in that** before step a) for determining the angular position, an initialization operation is performed in which corresponding working operating positions and/or corresponding rotational speeds are assigned to predetermined angular positions of the stem of the valve (3).

11. - The method according to claim 9, **characterized in that** when an angular position or information relating to the angular position that does not coincide with any of the predetermined angular positions of the stem of the valve (3) is received in step c), a shut-down operating cycle of the pump and/or a nil rotational speed is determined, and pump shut-down is actuated in step d).

12. - The method according to any one of claims 9 to 11, **characterized in that** the position of the stem of the valve (3) is determined in step a) from a magnetometer and/or an accelerometer.

13. - The method according to any one of claims 9 to 12, **characterized in that** sending and receiving the angular position or information relating to same in steps b) and c) is performed wirelessly.

## Patentansprüche

1. Baugruppe zum Filtrieren von Wasser in Schwimmbadanlagen, umfassend ein Mehrwegventil (3), welches mit drehbaren Steuermitteln (31) zum Betreiben eines Schaftes des genannten Ventils (3) versehen ist, für die Mänovrierbarkeit des Ventils beim Annehmen von mindestens zwei Betriebsstellungen, eine Hydraulikpumpe (1) zum Antreiben eines Wasserstroms; und wobei die Baugruppe **dadurch gekennzeichnet ist, dass** sie Folgendes umfasst:
Erfassungsmittel (4), welche in der Lage sind mindestens die Winkellage des Schaftes des Mehrwegventils (3) in Bezug auf eine Bezugsebene, vorzugsweise eine Horizontalebene, zu erfassen, und einen drahtlosen Emitter (5) zum Aussenden der Winkellage oder Auskunft bezüglich der von den Erfassungsmitteln (4) erfassten Winkellage, wobei die Erfassungsmittel und der Emitter auf einem und demselben Träger (7) montiert sind, welcher mit lösbaren Befestigungsmitteln (71) versehen ist, für dessen Kopplung an das Äußere der drehbaren Steuermittel (31) des Mehrwegventils (3); und
einen drahtlosen Empfänger (6) zum Empfangen der Winkellage oder der von dem Emitter (5) ausgesendeten Auskunft, welcher in der Lage ist einen Befehl zu erzeugen, zum Betreiben der Pumpe in einem spezifischen Betriebszyklus und/oder bei einer spezifischen Drehgeschwindigkeit der Pumpe.

2. Baugruppe nach Anspruch 1, wobei die Erfassungsmittel (4) ein Magnetometer und/oder ein Akzelerometer, und Auswertemittel, welche die momentane Winkellage oder Auskunft in Abhängigkeit der momentanen Winkellage des Schaftes des Ventils (3) für den Emitter (5) bereitstellen, umfassen.

3. Baugruppe nach Anspruch 1 oder 2, wobei die Baugruppe eine Steuervorrichtung (2) umfasst, zum Steuern der Geschwindigkeit der Hydraulikpumpe (1), in welcher der Empfänger (6) angeordnet ist.

4. Baugruppe nach einem der vorhergehenden Ansprüche, wobei die drehbare Steuermittel (31) des Mehrwegventils (3) dazu ausgebildet sind, die Erfassungsmittel (4) zum Erfassen der Winkellage des Schaftes des Mehrwegventils (3) und den Emitter (5) zum Aussenden der Winkellage oder Auskunft bezüglich der Winkellage in ihrem Inneren aufzunehmen.

5. Baugruppe nach einem der vorhergehenden Ansprüche, wobei das Mehrwegventil (3) ein Sechswegeventil mit sechs entsprechenden Betriebsstellungen ist.

6. Baugruppe nach einem der vorhergehenden Ansprüche, wobei die Steuervorrichtung (2) eine Speichereinheit umfasst, welche vorbestimmte Verhältnisse zwischen der Winkellage des Schaftes des Mehrwegventils (3) und den Betriebszyklen und/oder der Drehgeschwindigkeit der Pumpe speichert.

7. Baugruppe nach einem der vorhergehenden Ansprüche, wobei die Hydraulikpumpe (1) eine Zentrifugalpumpe ist, in welcher die Betriebszyklen durch die Drehgeschwindigkeit oder Frequenz derselben bestimmt werden.

8. Steuerungs- und Betriebssystem (10) für eine Schwimmbad-Filtrieranlage, umfassend eine Baugruppe zum Filtrieren von Wasser nach einem der Ansprüche 1 bis 7.

9. Steuerungs- und Betriebsverfahren für eine Schwimmbad-Filtrieranlage, in einem System (10) nach Anspruch 8, umfassend die folgenden Schritte:
a) das Bestimmen mindestens der Winkellage des Schaftes des Mehrwegventils (3) in Bezug auf eine Bezugsebene, vorzugsweise eine Horizontalebene;
b) das automatische Senden der genannten Winkellage oder Auskunft bezüglich derselben zu einer Steuervorrichtung (2) zum Steuern der Geschwindigkeit der Pumpe;
c) das Empfangen der genannten Lage oder Auskunft und das Bestimmen daraus eines Betriebszyklus und/oder einer Drehgeschwindigkeit; und
d) das Betreiben der Pumpe im zuvor bestimmten Betriebszyklus und/oder bei der zuvor bestimmten Drehgeschwindigkeit.

10. Verfahren nach Anspruch 9, **dadurch gekennzeichnet, dass** vor Schritt a) zum Bestimmen der Winkellage ein Initialisierungsvorgang durchgeführt wird, in welchem entsprechende Arbeitsbetriebsstellungen und/oder entsprechende Drehgeschwindigkeiten vorbestimmten Winkellagen des Schaftes des Ventils (3) zugeordnet werden.

11. Verfahren nach Anspruch 9, **dadurch gekennzeichnet, dass** wenn eine Winkellage oder Auskunft bezüglich der Winkellage in Schritt c) empfangen wird, welche nicht mit einem der vorbestimmten Winkellagen des Schaftes des Ventils (3) übereinstimmt, ein Betriebsstilllegungszyklus der Pumpe und/oder eine Nulldrehgeschwindigkeit bestimmt wird, und in Schritt d) die Stilllegung der Pumpe ausgelöst wird.

12. Verfahren nach einem der Ansprüche 9 bis 11, **dadurch gekennzeichnet, dass** die Lage des Schaftes des Ventils (3) in Schritt a) von einem Magnetometer und/oder einem Akzelerometer bestimmt wird.

13. Verfahren nach einem der Ansprüche 9 bis 12, **dadurch gekennzeichnet, dass** das Senden und das Empfangen der Winkellage oder Auskunft bezüglich derselben in den Schritten b) und c) drahltlos durchgeführt wird.

## Revendications

1. Ensemble pour la filtration d'eau dans des installations de piscine, comprenant une vanne multivoies (3) pourvue de moyens de commande rotative (31) pour actionner une tige de ladite valve pour la manoeuvrabilité de la vanne lors de l'adoption d'au moins deux positions de fonctionnement, une pompe hydraulique (1) pour refouler l'écoulement d'eau ; et l'ensemble étant **caractérisé en ce qu'**il comprend :
des moyens de détection (4) aptes à détecter au moins la position angulaire de la tige de la vanne multivoies (3) par rapport à un plan de référence, de préférence un plan horizontal, et un émetteur sans-fil (6) pour émettre la position angulaire ou l'information concernant la position angulaire détectée par les moyens de détection (4), les moyens de détection et l'émetteur étant montés sur le même support (7) pourvu de moyens de fixation amovibles (71) pour se coupler à l'extérieur des moyens de commande rotative (31) de la vanne multivoies (3) ; et
un récepteur sans-fil (6) pour recevoir la position angulaire ou l'information émise par l'émetteur (5), apte à générer une commande pour actionner la pompe dans un cycle de fonctionnement spécifique et/ou à une vitesse de rotation spécifique de la pompe.

2. Ensemble selon la revendication 1, dans lequel les moyens de détection (4) comprennent un magnétomètre et/ou un accéléromètre, et des moyens d'interprétation fournissant la position angulaire instantanée ou l'information dépendant de la position angulaire instantanée de la tige de la vanne (3) à l'émetteur (5).

3. Ensemble selon les revendications 1 ou 2, dans lequel l'ensemble comprend un dispositif de commande (2) pour commander la vitesse de la pompe hydraulique (1) dans laquelle est aménagé le récepteur (6).

4. Ensemble selon l'une quelconque des revendications précédentes, dans lequel les moyens de commande rotative (31) de la vanne multivoies (3) sont configurés pour loger intérieurement les moyens de détection (4) pour détecter la position angulaire de la tige de la vanne multivoies (3) et l'émetteur (5) pour émettre la position angulaire ou l'information concernant la position angulaire.

5. Ensemble selon l'une quelconque des revendications précédentes, dans lequel la vanne multivoies (3) est une vanne à six voies avec six positions de fonctionnement correspondantes.

6. Ensemble selon l'une quelconque des revendications précédentes, dans lequel le dispositif de commande (2) comprend une unité de mémoire stockant des rapports prédéterminés entre la position angulaire de la tige de la vanne multivoies (3) et les cycles de fonctionnement et/ou la vitesse de rotation de la pompe.

7. Ensemble selon l'une quelconque des revendications précédentes, dans lequel la pompe hydraulique (1) est une pompe centrifuge dans laquelle les cycles de fonctionnement sont déterminés par leur fréquence ou vitesse de rotation.

8. Système de commande et de fonctionnement (10) pour une installation de filtration de piscine, comprenant un ensemble pour la filtration d'eau selon l'une quelconque des revendications 1 à 7.

9. Système de commande et de fonctionnement pour une installation de filtration de piscine dans un système (10) selon la revendication 8, comprenant les étapes suivantes :
la détermination d'au moins la position angulaire de la tige de la vanne multivoies (3) par rapport à un plan de référence, de préférence un plan horizontal ;
l'envoi automatique de ladite position angulaire ou de l'information concernant celle-ci à un dispositif de commande (2) pour commander la vitesse de la pompe ;
la réception de ladite position ou information et la détermination à partir de celle-ci d'un cycle de fonctionnement et/ou la vitesse de rotation ; et
la mise en fonctionnement de la pompe dans le cycle de fonctionnement et/ou la vitesse de rotation préalablement déterminée.

10. Procédé selon la revendication 9, **caractérisé en ce qu'**avant l'étape a) de détermination de la position angulaire, on met en oeuvre une opération d'initialisation dans laquelle les positions opérationnelles de travail correspondantes et/ou les vitesses de rotation correspondantes sont assignées aux positions angulaires prédéterminées de la tige de la vanne (3).

11. Procédé selon la revendication 9, **caractérisé en ce que** lorsqu'une position angulaire ou l'information concernant la position angulaire ne coïncide pas avec l'une quelconque des positions angulaires prédéterminées de la tige de la vanne (3) reçues lors de l'étape c), un cycle de fonctionnement d'arrêt de la pompe et/ou une vitesse de rotation nulle est déterminée, et l'arrêt de la pompe est actionnée dans l'étape d).

12. Procédé selon l'une quelconque des revendications 9 à 11, **caractérisé en ce que** la position de la tige de la vanne (3) est déterminée dans l'étape a) à partir d'un magnétomètre et/ou un accéléromètre.

13. Procédé selon l'une quelconque des revendications 9 à 12, **caractérisé en ce que** l'envoi et la réception de la position angulaire ou de l'information concernant celle-ci dans les étapes b) et c) est mise en oeuvre sans-fil.
